# EUROPÄISCHE PATENTSCHRIFT

(11) **EP 1 158 853 B1**
(45) Veröffentlichungstag und Bekanntmachung des Hinweises auf die Patenterteilung: **20.12.2006**
(21) Anmeldenummer: 99953916.6
(22) Anmeldetag: 22.10.1999
(51) Int. Cl.: A01M 1/22, A01M 19/00

(54) **VERFAHREN UND VORRICHTUNG ZUM ABTÖTEN VON TIERISCHEN SCHÄDLINGEN IN HOLZ**
METHOD AND DEVICE FOR KILLING WOOD-DESTROYING ANIMALS
PROCEDE ET DISPOSITIF POUR EXTERMINER DES PARASITES ANIMAUX DANS LE BOIS

(30) Priorität: 22.10.1998 DE 19850195
(43) Veröffentlichungstag der Anmeldung: 05.12.2001
(73) Patentinhaber: 2 R Reha Technik GmbH, 14482 Potsdam (DE)
(72) Erfinder: BERG, Gunter, D-14476 Neu Fahrland (DE); RETTWEILER, Udo, D-12163 Berlin (DE)
(74) Vertreter: Gulde, Klaus W.
(86) Internationale Anmeldenummer: PCT/EP1999/008012
(87) Internationale Veröffentlichungsnummer: WO 2000/024247

(56) Entgegenhaltungen:
- WO-A-96/13157
- DE-A- 3 804 052
- DE-A- 4 326 019
- DE-A- 4 340 819
- GB-A- 2 274 589
- US-A- 5 287 818
- US-A- 5 575 106

## Beschreibung

Die Erfindung betrifft eine Vorrichtung zum Abtöten von tierischen Schädlingen in Holz durch physikalische Behandlung gemäß des Anspruchs 1.

Bei der Rekonstruktion und Sanierung von Altbauten, beispielsweise von Fachwerken, ist es erforderlich, die dort verbauten Holzwerkstoffe auf Schädlingsbefall zu untersuchen. Durchgefaulte Holzteile müssen vollständig ersetzt werden.

Holzkonstruktionen, die im Holzinneren von tierischen Schädlingen befallen sind, zeigen, solange der Befall nicht extreme Formen angenommen hat, immer noch eine ausreichende statische Stabilität und Festigkeit. Bei Rekonstruktions- und Sanierungsarbeiten ist es jedoch im Hinblick auf eine weitere Ausbreitung erforderlich, daß auch ein leichter Befall mit tierischen Schädlingen bekämpft werden muß.

Bisher erfolgte die Bekämpfung der tierischen Schädlinge mittels chemischer Holzschutzmittel und durch thermische Behandlung. Bei der chemischen Bekämpfung wird versucht, entsprechende Wirkstoffe über die Gas- oder Flüssigphase in die befallenen Holzteile hineinzubringen bzw. die gesamte Holzkonstruktion, damit zu behandeln. Flüssige Mittel müssen direkt aufgetragen werden. Bei der Behandlung über die Gasphase muß das Bauwerk abgeschottet werden, so daß die vernebelten oder verdampften Mittel nur in diesem abgeschotteten Raum in Kontakt mit dem Holz wirken können. Diese Behandlungen führen bei genügend langer Einwirkzeit zur Vernichtung der Schädlinge und zur weiteren Konservierung des Holzes. Nachteiligerweise werden oft in den Bauwerksbereichen, in denen z.B. durch ungenügende Konvektion kein Mittel oder keine ausreichende Wirkstoffkonzentration in das Holz eingedrungen bzw. sich ausgebildet hat, keine oder nur Teile der Schädlingspopulation vernichtet. Hinzu kommt, daß bei dieser Behandlungsart auch noch lange Zeit nach dem Einsatz die Wirkstoffe im Bauwerk in die Wohnatmosphäre ausdünsten können, womit die Gefahr von Gesundheitsschäden der Bewohner nicht auszuschließen ist.

Bei der thermischen Bekämpfung von Schädlingen wird ausgenutzt, daß Schädlinge Einwirktemperaturen, die deutlich über der Organismustemperatur liegen, nicht lebend überstehen. Deshalb ist es üblich, daß Teile oder auch ganze Gebäude abgedichtet und mittels spezieller Lufterhitzer auf ca. 60°C aufgeheizt werden. Diese Methode vermeidet den Nachteil chemischer Ausdünstungen und bewirkt zusätzlich auch eine Austrocknung feuchter Bauwerksteile. Nachteilig ist jedoch, daß an Stellen, an denen Kältebrücken zu einer wesentlichen Verringerung der Temperatur führen, mit dem Überleben der Schädlinge zu rechnen ist. Diese Methode ist sehr kostenintensiv. Soll der Erfolgsgrad erhöht werden, muß eine zusätzliche Wärmedämmung des Gebäudes erfolgen, so daß die Aufheizung möglichst alle Bauwerkteile aus Holz erreicht und die Bildung der Kältebrücken weitestgehend ausgeschlossen werden kann.

Ein wirksames dauerhaftes Abtöten von tierischen Schädlingen in Holz ist mit den herkömmlichen Mitteln und Technologien nicht vollständig realisierbar. Der Arbeits- und Energieaufwand ist dabei sehr groß:

Auch die Bekämpfung von tierischen Schädlingen in Möbeln und Holzteilen, die im Wohnbereich ihren Platz haben, ist mit den bekannten Behandlungsmethoden sehr problematisch. Eine chemische Behandlung scheidet in der Regel immer aus, da man davon ausgehen kann, daß behandelte Möbelteile oder Bilderrahmen die aufgenommenen, gesundheitsschädlichen Wirkstoffe nach und nach in die Wohnatmosphäre abgeben können. Auch eine thermische Behandlung durch Erwärmung auf eine den Organismus abtötende Temperatur ist häufig nicht durchführbar.

Darüberhinaus widerstehen eingepuppte Schädlinge häufig einer thermischen Bekämpfung, da die Umhüllungen gute Wärmedämmeigenschaften aufweisen.

In der WO 96/13157 wird eine Vorrichtung zur Erzeugung von Mikrowellen beschrieben. Die Vorrichtung besteht aus zwei Hauptteilen, ein mikrowellenerzeugendes bzw. -abgebendes Strahlungsteil und ein mit diesem über eine Versorgungsleitung verbundenes Versorgungsteil. Mittels Anordnung von Reflektoren, die die aus einer Antenne austretenden Mikrowellenstrahlung bündeln können, ist es möglich, mit Schädlingen befallene Stellen strahlungsmäßig zu behandeln, um ein Abtöten zu erreichen. Aufgrund der aufwändigen Konstruktion des Strahlungsteiles ist die Vorrichtung wenig kompakt und lässt sich für verschiedene Anwendungsbereiche, z.B. Holzdachkonstruktionen nur sehr unvollkommen einsetzen.

Der Erfindung liegt nun die Aufgabe zu Grunde, eine Vorrichtung anzubieten, die aufgrund ihrer Kompaktheit überall flexibel eingesetzt werden kann.

Die Lösung der Aufgabe erfolgt mit den Merkmalen des Anspruches 1.

Vorteilhafte Weiterbildungen sind in den Unteransprüchen angegeben.

Die erfindungsgemäße Vorrichtung besteht aus einem Arbeitsteil, dem Strahlkopf, und einem Versorgungsmodul, die beide über einen Versorgungsschlauch miteinander verbunden sind. Der Strahlkopf weist eine Mikrowellenaustrittsfläche auf, die praktisch mit jeder wie auch immer geformten Oberfläche von befallenen Holz in Kontakt gebracht werden kann. Über das Versorgungsmodul können dem Strahlkopf je nach Ausführung Energie bzw. Mikrowellenstrahlung sowie Steuerungssignale zugeführt werden. Eine im Versorgungsmodul angeordnete Energieversorgungseinheit kann beispielsweise eine aufladbare Batterie und/oder ein Netzteil sein. Vorteilhafterweise ist das Versorgungsmodul tragbar bzw. fahrbar ausgebildet.

Mikrowellen sind ein Sammelbegriff für elektromagnetische Strahlungen im Frequenzbereich 300 MHz bis 300 GHz. Der erfindungsgemäß eingesetzte Mikrowellenbereich liegt zwischen 0,1 und 30 GHz. Die Wärmeerzeugung von Mikrowellen ist insbesondere auf eine Anregung von Molekülen mit polarer Struktur zurückzuführen. Dazu zählt z.B. Wasser. Die Anregung der dort vorhandenen Wasserstoff- und Sauerstoffbindungen bei einer Resonanzfrequenz von einigen GHz führt zum Abtöten tierischer Schädlinge, da die dadurch erfolgte Temperaturerhöhung zum Verdampfen der Wasseranteile in den Organismen führt. Dadurch wird unmittelbar der Organismus vor Ort abgetötet. Eine Erwärumung des Holzes ist hierbei nicht erforderlich und auch nicht gewünscht. Allerdings wird sie als Nebenerscheinung in Abhängigkeit vom Wassergehalt des Holzes und der Behandlungsdauer kaum zu vermeiden sein. Eine Temperatursensorenanordnung im Strahlkopf signalisiert die Temperaturentwicklung auf der Holzoberfläche. Ein weiterer Vorteil des erfindungsgemäßen Verfahrens besteht in der Möglichkeit, Mikrowellenfrequenzen auszuwählen, die vorwiegend und gezielt lebenswichtige Biomakromoleküle der Holzschädlinge zerstören und damit eine Erwärmung von im Umfeld vorhandenem Wasser weitestgehend ausschließen.

Der erfindungsgemäße Strahlkopf erlaubt es, die Mikrowellenenergie genaustens zu kanalisieren und zu dosieren, so daß eine Anwendung außerhalb eines vollständigen Faradayschen Käfigs erlaubt ist. Die Kanalisierung erfolgt durch Justierung der Mikrowellenquelle in Kombination mit einer Anordnung von Reflexionsflächen. Durch den Einsatz von mindestens zwei Mikrowellenquellen im Strahlkopf, deren Strahlrichtung veränderbar und justierbar ist, ist die Möglichkeit gegeben, focusartige Strahlungsüberlagerungsbereiche zu schaffen, in denen eine besonders effektive Schädlingsbekämpfung zu erreichen ist. Diese erfindungsgemäße Weiterbildung unterstützt insbesondere auch die Behandlung von Holzteilen, die z.B. aufgrund von Abdeckungen nicht direkt erreichbar sind oder bei denen die Eindringtiefe variiert werden muß.

Die Mikrowellenaustrittsfläche kann aus strahlungsdurchlässigen Materialien wie Kunststoffe (Teflon), Glas oder Keramiken geformt sein.

Die Erfindung wird beispielhaft anhand einer Zeichnung näher erläutert. Es zeigen
- Fig. 1: eine schematische Darstellung eines Versorgungsmoduls,
- Fig.2: eine schematische Draufsicht eines Versorgungsmoduls,
- Fig.3: eine schematische Seitenansicht eines Strahlkopfes,
- Fig. 4: eine schematische Draufsicht eines Strahlkopfes
- Fig. 5: eine schematische Darstellung eines manuellen Einsatzes der Vorrichtung,
- Fig. 6: eine weitere Variante des Versorgungsmoduls in Draufsicht,
- Fig. 7: eine schematische Darstellung einer platzsparenden Unterbringung der Vorrichtung,
- Fig. 8: eine weitere, schematische Darstellung eines manuellen Einsatzes der Vorrichtung,
- Fig. 9: eine schematische Darstellung eines manuellen Einsatzes der Vorrichtung unter Verwendung eines Rückentragegestells,
- Fig. 10: eine schematische Darstellung des Strahlkopfes mit Eigenantrieb und
- Fig. 11: eine Schnittdarstellung des Strahlkopfes mit Eigenantrieb.

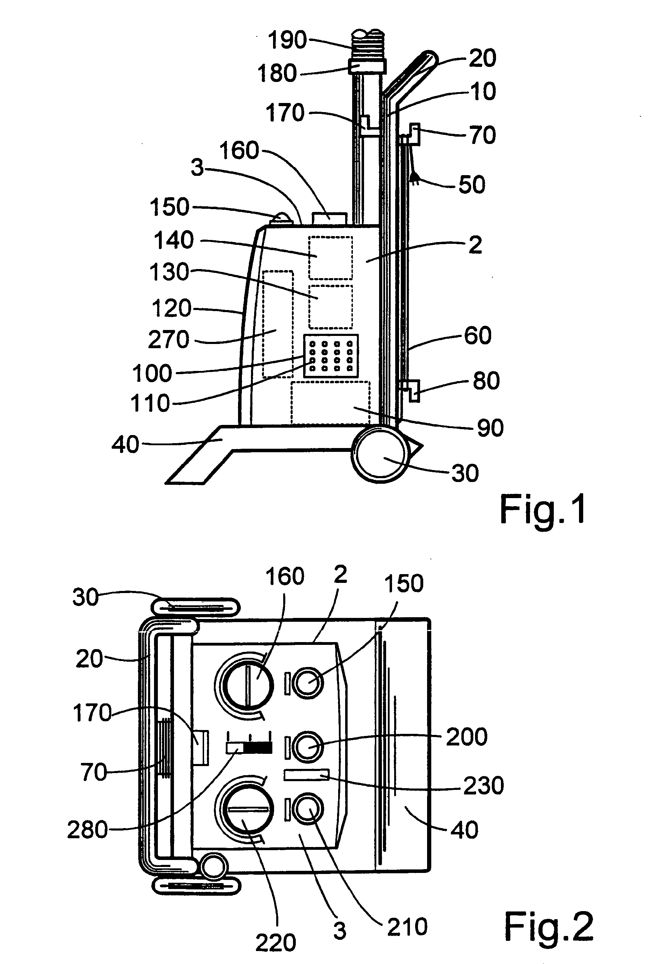

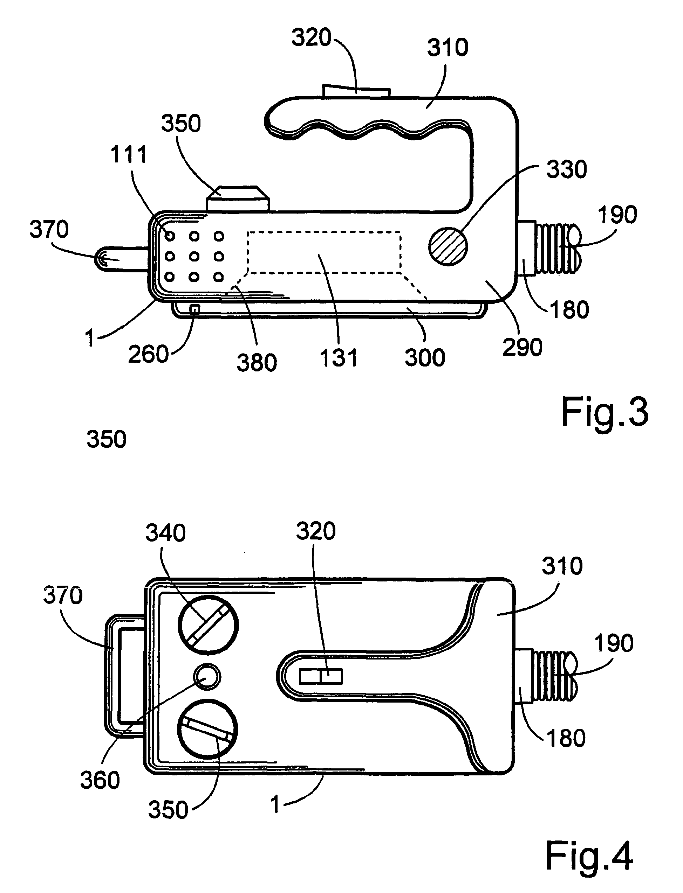

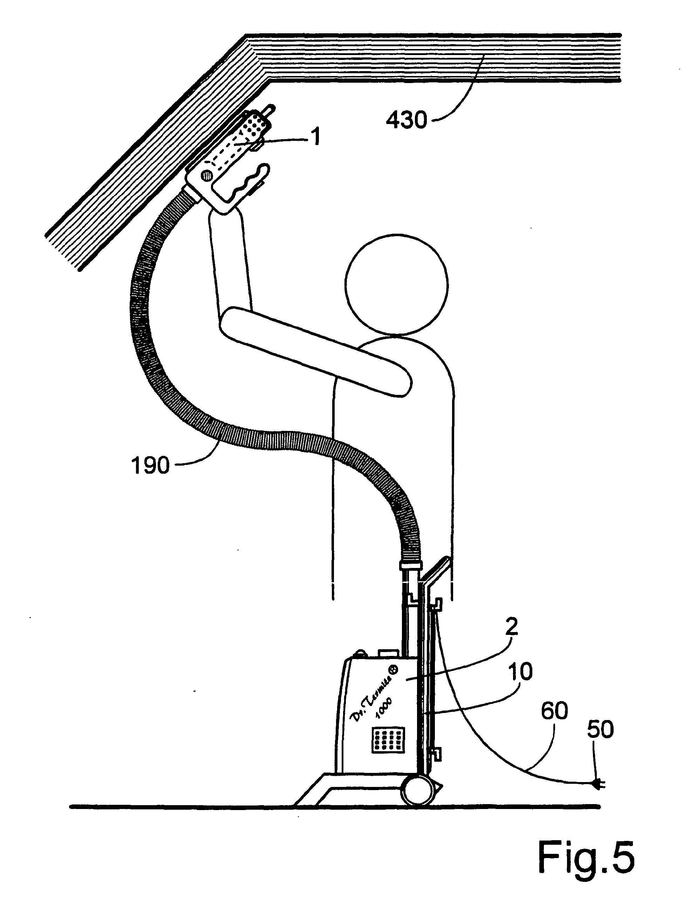

Die erfindungsgemäße Vorrichtung besteht aus zwei Hauptteilen, einem Strahlkopf 1 und einem Versorgungsmodul 2 (Fig. 1 und Fig. 3). Der Strahlkopf 1 und das Versorgungsmodul 2 sind über einen Versorgungsschlauch 190 funktionell miteinander verbunden (Fig. 5). Gemäß Figur 1 ist das Versorgungsmodul 2 auf einem Handwagen 10 angeordnet. Hierbei ist das Versorgungsmodul 2 an einer Bodenplatte 40 des Handwagens 10 befestigt. Im Inneren des Versorgungsmoduls 2 sind ein Hochspannungstransformator 90, ein Kühlgebläse 100, ein Mikrowellenerzeuger 130, z.B. ein Magnetron, eine aufladbare Batterie 270 und eine Steuerungselektronik 140 angeordnet. Ein Edelstahlgehäuse 120 umfaßt die genannten Hauptteile des Versorgungsmoduls 2. Die durch das Kühlgebläse 100 erzeugten Luftströme werden durch Luftschlitze 110 nach außen geleitet.

Auf einem Bedienfeld 3 sind ein Leistungsschalter 160, verbunden mit einer Signallampe 150, und ein Zeitwahlschalter 220, verbunden mit einer Signallampe 210, angeordnet. Eine Batteriestandsanzeige 280 gibt den jeweiligen Ladungszustand der Batterie 270 an. Eine dort ebenfalls vorgesehene Betriebssignallampe 201 zeigt den jeweiligen Betriebszustand an. Über einen oberen Haken 70 und einen unteren Haken 80 ist es möglich, ein Kabel 60 am Handwagen 10 aufzurollen. Ein Stecker 50 des Kabels 60 ist für den Anschluß an eine externe Spannungsquelle vorgesehen. Ein weiterer vorgesehener Haken 170 dient dem Verstauen des Strahlkopfes. Der Versorgungsschlauch 190 wird zum Strahlkopf 1 geführt, der in der Fig. 1 nicht dargestellt ist. Das Edelstahlgehäuse 120 kann mit weiteren Schutzgehäusen anderer Materialien umgeben werden.

In Fig. 3 und Fig. 4 ist schematisch der Strahlkopf 1 dargestellt. An einem Flansch 180 ist der Versorgungsschlauch 190 befestigt. Der Versorgungsschlauch 190 dient der Zuführung von Elektroenergie, Kühlluft und gegebenenfalls Mikrowellenenergie. Der Strahlkopf 1 besteht aus einem Gehäuse 290, an dem gemäß Fig. 3 ein Handgriff 310 angeformt ist. Im Inneren des Gehäuses 290 befindet sich eine Mikrowellenquelle 131. Sie kann direkt als Mikrowellenerzeuger 130 oder als Austritt 132 für Mikrowellen am Endstück eines Hohlwellenleiters, über den die Mikrowellen vom Versorgungsmodul 2 in den Strahlkopf 1 geleitet werden, ausgebildet sein. Der Hohlwellenleiter wird im Versorgungsschlauch 190 geführt. Der untere Abschluß des Gehäuses 290 des Strahlkopfes 1 bildet eine Gleitplatte 300, die für Mikrowellen durchlässig ist. Die Gleitplatte 300 ist auswechselbar und kann in ihrer Form der Form des Holzbauteiles angepaßt werden, das behandelt werden soll. Temperatursensoren 260, die im Bereich der Gleitplatte 300 fixiert sind, liefern in Verbindung mit der Steuerungselektronik 140 die notwendigen Daten für die Dauer der Mikrowellenbehandlung insbesondere im Hinblick auf das Verhindern des Überschreitens vorgegebener Grenztemperaturen. Luftschlitze 111 im Gehäuse 290 dienen dem Luftaustritt der Kühlluft. Eine am Gehäuse 290 angebrachte Schlaufe 270 ermöglicht den Strahlkopf 1 am Handwagen 10 aufzuhängen. Ein am Handgriff 310 befindlicher Schalter 320 gestattet ein von der Versorgungseinheit 2 unabhängiges Ein- und Ausschalten des Strahlkopfes 1. Das Kühlgebläse 100, das im Versorgungsmodul 2 angeordnet ist, dient der Kühlung des Strahlkopfes 1. An der Mikrowellenquelle 131 sind Abstrahlbleche 380 angeordnet, die den Mikrowellenaustritt durch die Mikrowellen durchlässige Gleitplatte 300 kanalisieren. Die Abstrahlbleche 380 sind mittels der Schalter 340 und 350 in x- und y- Richtung 340 und 350 verstellbar, damit eine besondere fokusierende und gerichtete Wirkung der Mikrowellen erzielbar ist.

Eine Signalleuchte 360 zeigt an, wenn Mikrowellen abgestrahlt werden. Der ergonomisch ausgebildete Handgriff 310 in Verbindung mit dem Schalter 320 erlaubt eine optimale Bedienung des Strahlkopfes 1. Die Erdung des Edelstahlgehäuses 290 erfolgt über den Versorgungsschlauch 190. Die Edelstahlausführung des Gehäuses 290 ermöglicht gleichzeitig eine Abschirmung der Strahlung und nur den Austritt der Strahlung durch die Gleitplatte 300.

In Fig. 5 ist ein manueller Einsatz der erfindungsgemäßen Vorrichtung dargestellt. Der Strahlkopf 1 wird mittels einer Person an einem Holzbalken 430 entlang geführt. Der Strahlkopf 1 ist über den Versorgungsschlauch 190 mit dem Versorgungsmodul 2 verbunden, das auf dem Handwagen 10 befestigt ist.

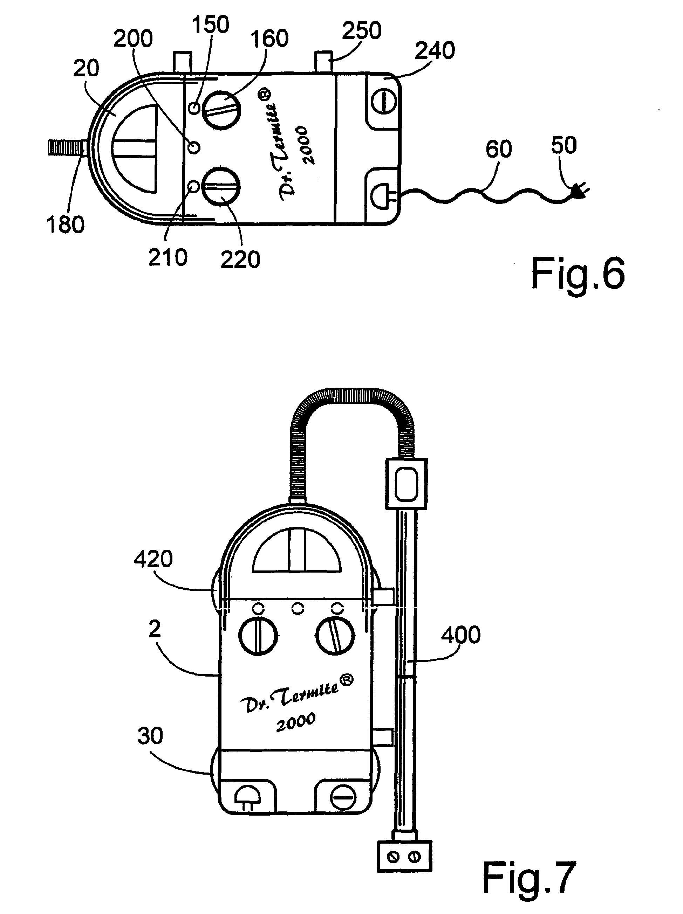

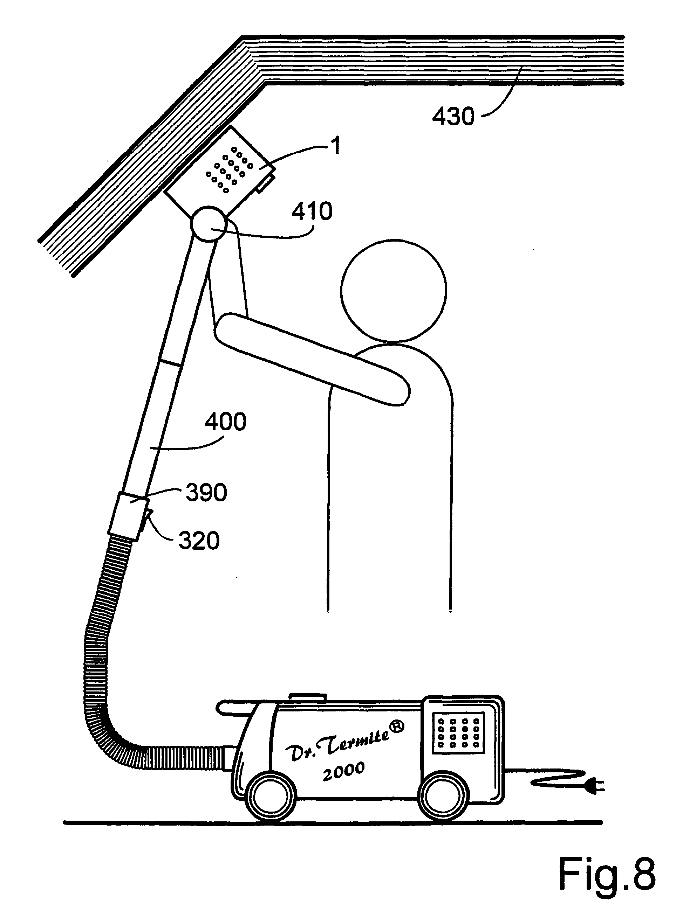

In Fig. 6, 7 und 8 sind weitere Ausführungsformen des Versorgungsmoduls 2 dargestellt. Es besitzt hier eine einem Bodenstaubsauger ähnliche Ausführung. Um die Flexibilität des Einsatzes weiterhin zu erhöhen, ist hier ein Verlängerungsstück 400 zwischen dem Strahlkopf 1 und dem Versorgungsschlauch 190 vorgesehen. Ein Anschlußstück 390 verbindet den Versorgungsschlauch 190 mit dem Verlängerungsstück 400. Ein im Anschlußstück 390 vorgesehener Schalter 320 dient zusätzlich dem Ein- und Ausschalten des Strahlkopfes 1, der in dieser Position durch die Bedienperson nicht erreichbar wäre. Das. Verlängerungsstück 400, das hier starr ausgebildet ist, wird über einen Flansch 410 am Strahlkopf 1 befestigt. Ein ebenfalls im Bedienfeld 3 angeordneter Fußschalter 230 betätigt eine Kabelaufrollautomatik.

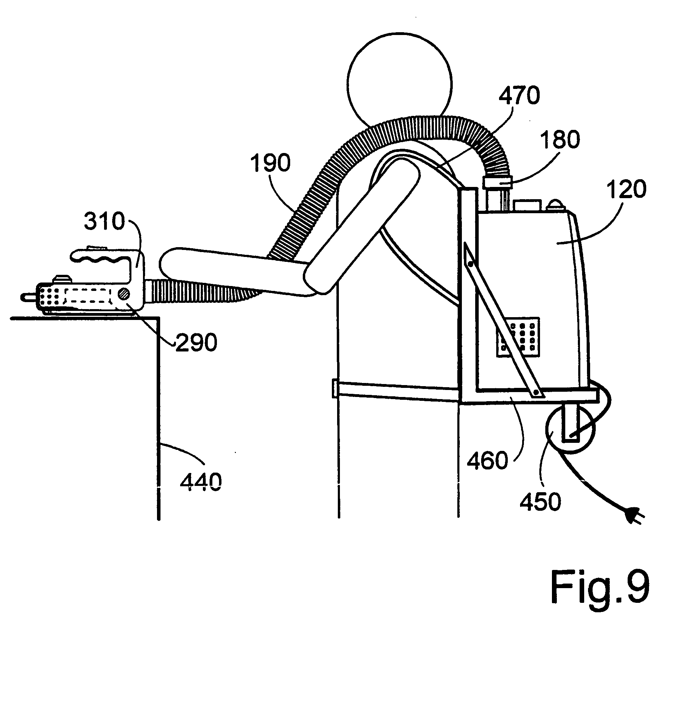

Gemäß Figur 9 ist das Versorgungsmodul 2 auf einem Tragegestell 460 befestigt. Das Tragegestell 460 wird von einer Person getragen. Zusätzliche Gurtsysteme 470 sorgen für eine sichere Befestigung. Eine flexible Bewegung der Person wird durch eine zusätzlich angeordnete Kabeltrommel 450 ermöglicht. Auf diese Weise ist es auch möglich, mittels des Strahlkopfes 1 ohne Einschränkungen Möbel 440 (Fig. 9) zu behandeln.

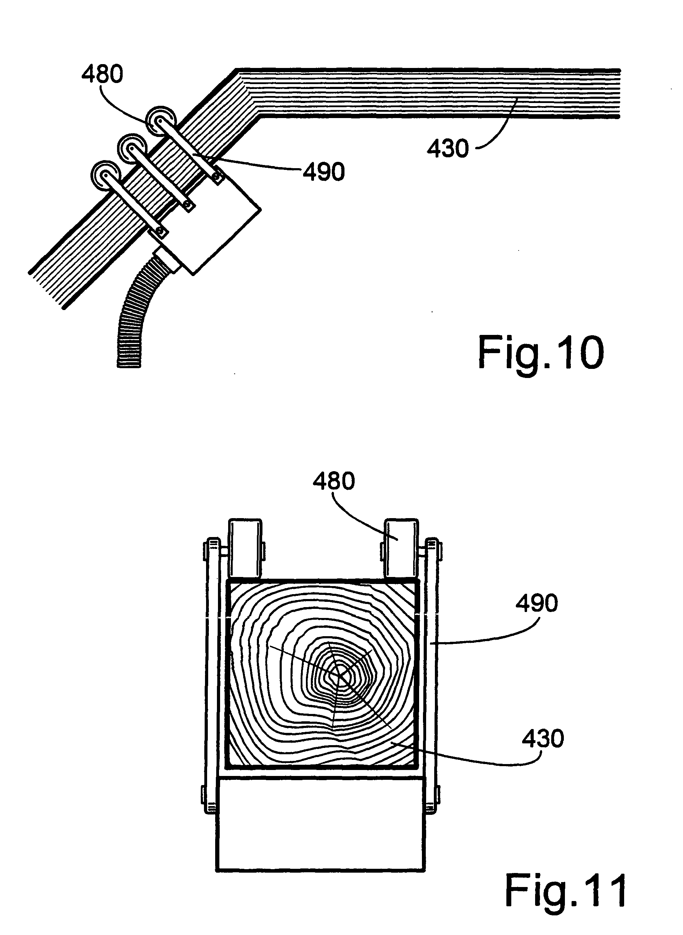

Zur Arbeitserleichterung insbesondere für unzugängliche Holzbalken 430 ist gemäß Figur 10 und Figur 11 ein Eigenantrieb des Strahlkopfes 1 vorgesehen. Der Eigenantrieb treibt die Rollen 480, die über ein Befestigungssystem 490 gehaltert sind. Der Strahlkopf 1 kann nun mit einer zuvor eingestellten Geschwindigkeit an den entsprechenden Holzbalken 430 entlangfahren.
Zum Nachweis der Wirksamkeit der erfindungsgemäßen Vorrichtung wurden Testversuche unter Laborbedingungen mit einem Magnetron-Versuchsaufbau von 1kW Leistung und einer Frequenz von 2450 MHz an kleinen mit tierischen Schädlingen befallenen Holzstücken mit der Größe 350 mm x 200 mm x 200 mm durchgeführt. Die Holzstücke waren in etwa 3 Minuten durchstrahlt. Die tierischen Schädlinge waren abgetötet und nach einer mehrwöchigen Lagerung und Beobachtung war kein Schädlingsbefall mit tierischen Schädlingen feststellbar.

### Bezugszeichenliste

- 1: Strahlkopf
- 2: Versorgungsmodul
- 3: Bedienfeld
- 10: Handwagen
- 20: Griff
- 30: Handwagenrollen
- 40: Bodenplatte
- 50: Stecker
- 60: Kabel
- 70: oberer Haken
- 80: unterer Haken
- 90: Hochspannungstransformator
- 100: Kühlgebläse
- 110: Luftschlitz
- 111: Luftschlitz
- 120: Gehäuse
- 130: Mikrowellenerzeuger
- 131: Mikrowellenquelle
- 132: Austritt
- 140: Steuerungselektronik
- 150: Signallampe
- 160: Leistungswahlschalter
- 170: Haken
- 180: Flansch
- 190: Versorgungsschlauch
- 200: Betriebssignallampe
- 210: Signallampe
- 220: Zeitwahlschalter
- 230: Fußschalter
- 240: Schalter
- 250: Befestigungsvorrichtung
- 260: Temperatursensor
- 270: Batterie
- 280: Batteriestandanzeige
- 290: Gehäuse
- 300: Gleitplatte
- 310: Handgriff
- 320: Schalter
- 330: akkustischer Signalgeber
- 340: Justierung (x-Richtung)
- 350: Justierung (y-Richtung)
- 360: Signalleuchte
- 370: Schlaufe
- 380: Abstrahlblech
- 390: Anschlußstück
- 400: Verlängerungsstück
- 410: Flansch
- 420: Rad
- 430: Holzbalken
- 440: Holzmöbel
- 450: Kabeltrommel
- 460: Tragegestell
- 470: Gurtsystem
- 480: Rolle
- 490: Befestigungssystem

## Patentansprüche

1. Vorrichtung zum Abtöten von tierischen Schädlingen durch Mikrowellenstrahlung, die einen Strahlkopf (1) und ein Versorgungsmodul (2) aufweist, die über einen Versorgungsschlauch (190) miteinander verbunden sind, wobei der Strahlkopf (1) mindestens eine Mikrowellenquelle (131) aufweist, mindestens einen Mikrowellenerzeuger (130) im Strahlkopf (1) und/oder im Versorgungsmodul (2) angeordnet ist,
**dadurch gekennzeichnet, dass**
der Strahlkopf (1) manuell bedienbar und handhaltbar ausgestattet ist und dass das Versorgungsmodul (2) eine Energieversorgungseinheit (270), eine Steuerungselektronik (140) und einen Hochspannungstransformator (90) aufweist.

2. Vorrichtung nach Anspruch 1,
**dadurch gekennzeichnet, dass**
der Strahlkopf (1) aus einem Gehäuse (290) aus Metall, das einen für Mikrowellenstrahlen durchlässigen Bereich (300) aufweist, besteht.

3. Vorrichtung nach einem der Ansprüche 1 oder 2,
**dadurch gekennzeichnet, dass**
die Mikrowellenquelle (131) als Mikrowellenstrahlungserzeuger (130) ausgebildet ist.

4. Vorrichtung nach einem der Ansprüche 1 oder 2,
**dadurch gekennzeichnet, dass**
die Mikrowellenquelle (130) als Austritt (132) eines Hohlwellenleiters für Mikrowellen ausgebildet ist.

5. Vorrichtung nach einem der Ansprüche 1 bis 4,
**dadurch gekennzeichnet, dass**
der für Mikrowellen durchlässige Bereich (300) des Strahlkopfes (1) eine entsprechend der Oberfläche des Holzes ausgeformte Gleitfläche aufweist.

6. Vorrichtung nach einem der Ansprüche 1 bis 5,
**dadurch gekennzeichnet, dass**
der Strahlkopf (1) einen Handgriff (310) aufweist.

7. Vorrichtung nach einem der Ansprüche 1 bis 6,
**dadurch gekennzeichnet, dass**
der Strahlkopf (1) einen Eigenantrieb aufweist, der ein elektronisch gesteuertes Abfahren der Holzoberfläche ermöglicht.

8. Vorrichtung nach einem der Ansprüche 1 bis 7,
**dadurch gekennzeichnet, dass**
der Strahlkopf (1) Temperatursensoren (260) aufweist.

9. Vorrichtung nach einem der Ansprüche 1 bis 8,
**dadurch gekennzeichnet, dass**
der Versorgungsschlauch (190) flexibel ausgebildet ist und Hohlwellenleiter, Kühlmittelleitungen, Stromleitungen und/oder Erdungsleitungen enthält.

10. Vorrichtung nach einem der Ansprüche 1 bis 8,
**dadurch gekennzeichnet, dass**
die Mikrowellenquelle (131) in mindestens zwei Raumrichtungen verstellbar und justierbar ist.

11. Vorrichtung nach einem der Ansprüche 1 bis 9,
**dadurch** gekennezeichnet, dass
im Gehäuse (290) Reflexionsflächen (380) für Mikrowellen angeordnet sind, die mindestens in zwei Raumrichtungen verstellbar und justierbar sind.

12. Vorrichtung nach einem der Ansprüche 1 bis 11,
**dadurch gekennzeichnet, dass**
das Versorgungsmodul (2) fahrbar und/oder tragbar ausgebildet ist.

## Claims

1. Device for killing animal pests by means of microwave radiation comprising a radiation head (1) and a supply module (2) which are connected with each other through a supply hose (190), the radiation head (1) having at least one microwave source (131), at least one microwave generator (130) arranged within the radiation head (1) and/or within the supply module (2),
**characterised in that**
the radiation head (1) is manually operable and hand-heldable and the supply module (2) is being provided with a power supply unit (270), control electronics (140) and a high-voltage transformer (90).

2. Device according to claim 1,
**characterised in that**
the radiation head (1) consists of a housing (290) made of metal which has a section (300) that is transparent for microwave rays.

3. Device according to any of the claims 1 or 2,
**characterised in that**
the microwave source (131) is designed as a microwave radiation generator (130).

4. Device according to any of the claims 1 or 2,
**characterised in that**
the microwave source (130) is designed as the exit (132) of a waveguide for microwaves.

5. Device according to any of the claims 1 to 4,
**characterised in that**
the section (300) of the radiation head (1) that is transparent for microwaves is provided with a sliding surface matching the surface of the wood.

6. Device according to any of the claims 1 to 5,
**characterised in that**
the radiation head (1) is provided with a handle (310).

7. Device according to any of the claims 1 to 6,
**characterised in that**
the radiation head (1) has an own drive facilitating an electronically controlled driving over the surface of the wood.

8. Device according to any of the claims 1 to 7,
**characterised in that** the radiation head (1) is provided with temperature sensors (260).

9. Device according to any of the claims 1 to 8,
**characterised in that**
the supply hose (190) is flexible and contains the waveguide, coolant lines, power lines and/or earth leads.

10. Device according to any of the claims 1 to 8,
**characterised in that**
the microwave source (131) is adjustable and movable in at least two spatial directions.

11. Device according to any of the claims 1 to 9,
**characterised in that**
reflecting surfaces (380) for microwaves are arranged within the housing (290) and are adjustable and movable in at least two spatial directions.

12. Device according to any of the claims 1 to 11,
**characterised in that**
the supply module (2) has a mobile or portable design.

## Revendications

1. Dispositif pour exterminer des parasites animaux par rayonnement micro-ondes, qui présente une tête de radiation (1) et un module d'alimentation (2) qui sont raccordés entre eux par le biais d'un tuyau d'alimentation (190), la tête de radiation (1) présentant au moins une source micro-ondes (131), au moins un générateur de micro-ondes (130) étant disposé dans la tête de radiation (1) et/ou dans le module d'alimentation (2),
**caractérisé en ce que**
la tête de radiation (1) peut être manoeuvrée manuellement et est équipée de façon à pouvoir être tenue dans la main, et **en ce que** le module d'alimentation (2) présente une unité d'alimentation en énergie (270), une électronique de commande (140) et un transformateur haute tension (90).

2. Dispositif selon la revendication 1,
**caractérisé en ce que**
la tête de radiation (1) se compose d'un boîtier (290) en métal qui présente une zone (300) transparente aux rayons micro-ondes.

3. Dispositif selon une des revendications 1 ou 2,
**caractérisé en ce que**
la source micro-ondes (131) est constituée en tant que générateur de rayonnement micro-ondes (130).

4. Dispositif selon une des revendications 1 ou 2,
**caractérisé en ce que**
la source micro-ondes (130) est constituée en tant que sortie (132) d'un guide d'ondes creux pour micro-ondes.

5. Dispositif selon une des revendications 1 à 4,
**caractérisé en ce que**
la zone (300) de la tête de radiation (1) transparente aux micro-ondes présente une surface de glissement conformée selon la surface du bois.

6. Dispositif selon une des revendications 1 à 5,
**caractérisé en ce que**
la tête de radiation (1) présente une poignée (310).

7. Dispositif selon une des revendications 1 à 6,
**caractérisé en ce que**
la tête de radiation (1) présente un entraînement propre qui permet un déplacement, à commande électronique, à la surface du bois.

8. Dispositif selon une des revendications 1 à 7,
**caractérisé en ce que**
la tête de radiation (1) présente des capteurs de température (260).

9. Dispositif selon une des revendications 1 à 8,
**caractérisé en ce que**
le tuyau d'alimentation (190) est constitué de façon flexible et contient des guides d'ondes creux, des conduites de produit de refroidissement, des lignes électriques et/ou des lignes de mise à la terre.

10. Dispositif selon une des revendications 1 à 8,
**caractérisé en ce que**
la source micro-ondes (131) est déplaçable et ajustable dans au moins deux directions spatiales.

11. Dispositif selon une des revendications 1 à 9,
**caractérisé en ce que**,
dans le boîtier (290), des surfaces de réflexion (380) pour micro-ondes sont disposées, qui sont déplaçables et ajustables dans au moins deux directions spatiales.

12. Dispositif selon une des revendications 1 à 11,
**caractérisé en ce que**
le module d'alimentation (2) est constitué de façon mobile et/ou portable.
